# EUROPÄISCHE PATENTSCHRIFT

(11) **EP 0 582 344 B1**
(45) Veröffentlichungstag und Bekanntmachung des Hinweises auf die Patenterteilung: **07.10.1998**
(21) Anmeldenummer: 93202246.0
(22) Anmeldetag: 29.07.1993
(51) Int. Cl.: H04Q 7/00, H04B 7/26

(54) **Zellulares Mobilfunksystem mit Teilzellen**
Cellular mobile radio system with partial cells
Système radio mobile cellulaire avec cellules partielles

(30) Priorität: 04.08.1992 DE 4225685
(43) Veröffentlichungstag der Anmeldung: 09.02.1994
(73) Patentinhaber: Philips Patentverwaltung GmbH, 22335 Hamburg (DE); Koninklijke Philips Electronics N.V., 5621 BA Eindhoven (NL)
(72) Erfinder: Duque-Anton, Jesus Manuel, D-20097 Hamburg (DE); Kunz, Dietmar-Wilhelm, D-20097 Hamburg (DE); Rüber, Bernhard, D-20097 Hamburg (DE)
(74) Vertreter: Volmer, Georg, Dipl.-Ing.

(56) Entgegenhaltungen:
- WO-A-91/18450
- WO-A-92/02104
- WO-A-92/12602
- GB-A- 2 242 806
- US-A- 4 144 411
- 33RD IEEE VEHICULAR TECHNOLO- GY CONFERENCE, The Institute of Electrical and Electronics, Mai 1983, New York SAMUEL W. HALPERN "Reuse Partitioning in Cellular Systems" Seiten 322-327

## Beschreibung

Die Erfindung betrifft ein zellulares Mobilfunksystem mit Feststationen und Mobilstationen, bei dem eine Unterteilung einer Funkzelle in Teilzellen vorgesehen ist, und jeder Teilzelle eine eigene Auswahl von Funkkanälen zuordbar ist, wobei zur Zuordnung einer Mobilstation zu einer Teilzelle die Messung und Auswertung funktechnischer Parameter anderer Feststationen vorgesehen ist. Die Erfindung betrifft auch eine Steuer- und Auswertevorrichtung für ein solches Mobilfunksystem und Feststationen für ein solches Mobilfunksystem.

Mobilfunksysteme zur Abdeckung eines größeren Versorgungsbereiches werden schon seit längerem als zellulare Funknetze konzipiert. In jeder Zelle eines solchen Funknetzes ist mindestens eine ortsfeste Feststation vorgesehen, die die Funkverbindung zu den in Ihrer Funkzelle befindlichen Mobilstationen aufrecht erhält. Um das für das jeweilige Funksystem verfügbare Frequenzband einer möglichst großen Teilnehmerzahl im gesamten Mobilfunksystem zugänglich zu machen, kommt der Funknetzplanung eine besondere Bedeutung zu.

Bei der Funknetzplanung wird jeder Feststation aus der Gesamtzahl der verfügbaren Funkkanäle eine beschränkte Auswahl von Funkkanälen zugewiesen. In benachbarten Funkzellen werden sich voneinander unterscheidende Funkkanäle benutzt, so daß eine Beeinträchtigung der Funkkanäle untereinander vermieden werden kann. Wegen des beschränkten Frequenzbandes müssen die Funkkanäle im gesamten Funknetz aber so oft wie möglich wiederverwendet werden, um eine möglichst hohe Teilnehmerkapazität zu erzielen. Das Verhältnis von Gesamtzahl der Funkzellen zu der Anzahl der Funkzellen mit gleichen Frequenzen wird hierbei als Wiederholungsfaktor (reuse-factor) bezeichnet.

Aus dem Aufsatz "REUSE PARTITIONING IN CELLULAR SYSTEMS", Samuel W. Halpern, 33th IEEE Veh. Tech. Conf., May 1983, Seiten 322-327 ist ein Konzept für Zellulare Funksysteme bekannt, bei dem zur Kapazitätssteigerung des Funksystems die zur Verfügung stehenden Funkkanäle mit unterschiedlichem Wiederholungsfaktor verwendet werden. Zur Vergabe eines Funkkanals an eine Mobilfunkstation wird die Qualität eines Empfangssignals gemessen. Während Mobilstationen mit der besten Empfangs-Signalqualität ein Funkkanal aus der Gruppe der Funkkanäle mit dem kleinsten Wiederholungsfaktor zugewiesen wird, wird Mobilfunkstationen mit der schlechtesten Empfangs-Signalqualität ein Funkkanal aus der Gruppe der Funkkanäle mit dem größten Wiederholungsfaktor zugewiesen. Dadurch wird das Gebiet einer Funkzelle in Teilzellen mit unterschiedlichen Wiederholungsfaktor zerlegt. Unter Voraussetzung idealisierter Wellenausbreitungsbedingungen bestehen die auf diese Weise gebildeten Teilzellen aus zueinander konzentrischen Kreisflächen.

In WO 91/18450 wird dieses Prinzip aufgegriffen, wobei eine Mobilstation nicht nur die Empfangsfeldstärke der eigenen Feststation, sondern zusätzlich auch die Empfangsfeldstärken benachbarter Feststationen mißt. Aus diesen Meßwerten wird ein Interferenzgradient ermittelt, anhand dessen die Mobilstation einer jeweiligen Funkkanalgruppe zugewiesen wird, wobei sich die Funkkanalgruppen wiederum durch unterschiedliche Wiederholungsfaktoren unterscheiden.

Die auf diese Weise getroffene Zuordnung berücksichtigt in idealer Weise die von einer Mobilstation jeweils vorgefundene Störsituation. Da alle Meßwerte zu einem einzigen Wert, dem Interferenzgradienten zusammengefaßt sind gewährleistet dies eine schnelle Berechenbarkeit dieses Wertes. Andernseits können aufgrund der jeweils anzutreffenden Wellenausbreitungsbedingungen Funkorte mit gleichem Interferenzgradienten existieren, die tatsächlich aber räumlich weit auseinanderliegen.

Voraussetzung für das soeben geschilderte Teilzellenkonzept ist eine sorgfältige und aufwendige Planung des Funknetzes unter Berücksichtigung der unterschiedlichen Wiederholungsfaktoren.

Eine solche Planung beginnt zunächst mit dem Erstellen eines Kanalverteilungsplans. Bei der Erstellung eines Kanalverteilungsplan ist der Kanalbedarf jeder Funkzelle zu berücksichtigen. Der Kanalbedarf einer Funkzelle, ergibt sich aus der Größe der Funkkzelle und dem örtlich zu erwartenden Funkverkehrsaufkommen. Hierbei sind beispielsweise im Bereich einer Großstadt mehr Funkkanäle erforderlich, als in einem rein ländlichen Gebiet. Teilweise werden daher auch schon Funkzellen variabler Größe vorgesehen, die es ermöglichen in sogenannten Kleinzellen bei entsprechend verminderter Sendeleistung eine Wiederbenutzung des Funkkanals in schon geringerem Abstand von der Kleinzelle zu ermöglichen.

Wie weit diese Funkzellen zur Vermeidung einer Funkstörung voneinander entfernt sein müssen, ist von vielen Faktoren abhängig. Diese Faktoren sind beispielsweise die Sendeleistung und die Funkwellenausbreitungsbedingungen, die durch Abschattungen, Beugungen, Streuungen, Reflexionen und Mehrwegeausbreitung auf dem Funkübertragungsweg gebildet werden.

Bei der Planung von Funkzellen werden topografische Daten (wie Geländehöhe, Bebauung etc.) mittels statistischer Methoden berücksichtigt oder durch Meßfahrten mit Meßwagen entsprechende Daten ermittelt. Mit Verfahren wie beispielsweise Graphenfärbung werden sich gegenseitig störende Funkkanäle hinreichend weit auseinanderliegenden Funkzellen zugeordnet.

Aus WO 90/10342 ist eine Methode zur Planung von Funkzellen bekannt, bei der in der Planungsphase mit eigens dafür vorgesehenen Meßfahrzeugen Feldstärke- und Interferenzmessungen durchgeführt werden, deren Ergebnisse in einer Datenbank gespeichert werden. Jede Funkzelle bekommt eine Anzahl von Funkkanälen zugewiesen, die dem geschätzten, maximal zu erwartendem Verkehrsaufkommen entspricht. Auf der Basis der Meßergebnisse wird sodann eine sog. Exklusionmatrix berechnet, welche die Wechselwirkung zwischen den einzelnen Funkzellen wiederspiegelt. In einem iterativen Zuweisungsalgorithmus wird die Funkkanalzuweisung in zufälliger Reihenfolge vergeben. Falls auf diese Weise keine vollständige Kanalzuweisung erfolgen kann, wird ein neuer Versuch in irgend einem der genannten Schritte unternommen.

Bei solchen Kanalvergabeverfahren ist somit jeder Funkzelle, beziehungsweise jeder Funkkanalgruppe mit eigenem Wiederholungsfaktor eine bestimmte Anzahl von Funkkanälen von Anfang an fest zugewiesen. Bei begrenztem Kanalangebot geht die Steigerung der Anzahl der einer Funkzelle zugewiesenen Funkkanäle somit immer zu Lasten des Kanalangebots in den benachbarten Funkzellen. Durch den weiter steigenden Bedarf nach mobiler Kommunikation werden sowohl die zur Zeit existierenden als auch die im Aufbau befindlichen Mobilfunknetze kurz- bzw. mittelfristig ihre Kapazitätsgrenzen erreichen.

Nur durch die auf statistischer Grundlage getroffenen Vereinfachungungen ist bei den bekannten Methoden der Planungsaufwand in vertretbaren Grenzen zu halten. Gerade aber bei Klein- und Kleinstzellen sind die statistischen Vereinfachungen nicht mehr zulässig, weil die berechneten Daten zunehmend unsicherer werden.

Auch die Durchführung von relativ aufwendigen Meßfahrten kann in der Planungsphase die bekannten Nachteile lediglich teilweise aufheben. Beispielsweise kann mit Meßfahrten die sich im Betrieb des Mobilfunksystems einstellende Verkehrsstruktur nur ungenügend vorausgesehen werden.

Lange vor dem beschriebenen reuse partitioning wurde die Kapazität bei zellularen Mobilfunknetzen durch die Verwendung von Klein- und Kleinstzellen erhöht, wobei jede Zelle unabhängig von ihrer Größe funktechnisch von einer eigenen Feststation versorgt wird. Verläßt eine Mobilfunkstation das Funkversorgungsgebiet einer Groß-, Klein- oder Kleinstzelle, so muß sie durch einen als Handover bezeichneten Prozeß an die Feststation weitergereicht werden, in deren Funkversorgungsgebiet sie sich hineinbewegt.

Zur Zuordnung einer Mobilstation zu einer neuen Feststation ist beispielsweise aus WO 92/12602 ein Handover-Entscheidungssystem für ein zellulares Mobilfunksystem bekannt, in welchem die Signalqualität einer Funkverbindung überwacht wird und Steuermittel bei steigender bzw. fallender Signalqualität einen Handover-Prozeß initiieren. In diesem System enthält vorzugsweise die Mobilstation Überwachungsmittel zur Messung der Signalqualität, beispielsweise der Empfangsfeldstärke oder einer Bitfehlerrate, und überträgt diese vorzugsweise zu ihrer Feststation, wobei die einzelnen empfangenen Feststationen beispielsweise durch ihre unterschiedliche Frequenz unterscheidbar sind. Zur Entscheidung, ob ein Handover durchgeführt werden soll, wird u.a. ein Satz von Meßergebnissen mit Mustern von Meßergebnissen, die in einer Nachschlagetabelle gespeichert sind, verglichen.

Ein zellulares Mobilfunksystem mit Groß-, Klein- und Kleinstzellen unterscheidet sich von einem Mobilfunksystem mit reuse partitioning jedoch grundsätzlich darin, daß alle Teilzellen einer Zelle eines zellularen Mobilfunksystems mit reuse partitioning von einer gemeinsamen Feststation bedient werden und bei einem Wechsel von einer Teilzelle in eine Teilzelle der gleichen übergeordneten Funkzelle ein Weiterreichen der Mobilstation von einer Feststation zu einer anderen Feststation nicht erforderlich ist.

Aufgabe der Erfindung ist es, bei einem Mobilfunksystem der eingangs genannten Art eine Steigerung der Funkkanalkapazität auf möglichst einfache Weise zu erzielen.

Diese Aufgabe wird dadurch gelöst, daß vorgesehen ist, aus den Meßwerten einen, einer jeweiligen Mobilstation zugeordneten Ortsvektor zu bilden und mittels des jeweiligen Ortsvektors die betreffende Mobilstation einer bestimmten Teilzelle zuzuordnen.

Die Zusammenfassung der Meßwerte zu einem Ortsvektor ermöglicht mit verhältnismäßig geringem Aufwand eine bessere Auflösung des Funkortes einer Mobilstation. Während die Form von Teilzellen, die aufgrund einer Zuordnung durch einen Gradienten gebildet werden, allein von den vorgefunden Ausbreitungsbedingungen des Funknetzes abhängen, eröffnet sich nämlich durch die Verwendung eines Ortsvektors die Möglichkeit, den Teilzellen eine nahezu beliebige Form zu geben. Dies hat zur Folge, daß solchermaßen gebildete Teilzellen gegenüber Teilzellen der gleichen Funkzelle und gegenüber Teilzellen in anderen (benachbarten) Funkzellen je nach den zur Einordnung verwendeten Parametern entweder räumlich oder hinsichtlich ihrer Störsituation besser gegeneinander abgegrenzt werden können.

Dies muß zwar zunächst mit einem etwas größerem Aufwand zur Berechnung einer Zuordnung des ermittelten Ortsvektor zu einer der vorgesehenen Teilzellen erkauft werden, hat aber den enormen Vorteil, daß die in jeder Funkzelle unterschiedlich vorgefundenen, eventuell sogar an sich störenden topografischen und morphologischen Eigenschaften dazu genutzt werden können, Teilzellen zu bilden die eben durch ihre topologischen und morphologischen Eigenschaften in natürlicher Weise gegeneinander abgegrenzt sind. Somit kann jeder zusätzliche technische Aufwand wie Sektorisierung der Funkzelle durch Richtantennen, zusätzliche Kleinund Kleinstzellen etc. entfallen. Darüberhinaus führt die an den natürlichen Gegebenheiten orientierte Abgrenzung der Teilzellen überraschenderweise zu dem Effekt, daß alle Funkkanalgruppen einer jeden Teilzelle den gleichen Wiederholungsfaktor aufweisen dürfen, und dennoch eine Kapazitätssteigerung erreicht wird. Dies hat noch den besonderen Vorteil, daß sich die Planung der Funkkanalgruppen wesentlich vereinfachen läßt, und dennoch die Gesamtkapazität des Funknetztes gesteigert werden kann.

Vorzugsweise wird die Unterteilung einer Funkzelle in Teilzellen so vorgenommen, daß in einer Teilzelle ähnliche funktechnische Verhältnisse anzutreffen sind. Eine Teilzelle kann, muß aber nicht notwendigerweise einem bestimmten örtlichen Gebiet der Funkzelle entsprechen. Dennoch ist es durch den Ortsvektor möglich, Funkorte die den gleichen Interferenzgradienten aufweisen räumlich aufzulösen und unterschiedlichen Teilzellen zuzuordnen.

Zur Messung geeignete funktechnische Parameter sind beispielsweise Bit- und Rahmenfehlerrate, Signal- zu Interferenzverhältnis, aktuelle Kanalbelegungssituation, Entfernung zwischen Feststation und Mobilstation, etc.. Zufriedenstellende Ergebnisse lassen sich bereits durch Verwendung der Signalstärke als funktechnischen Parameter erzielen. Vorzugsweise können hierbei die gemessenen Signalstärken in einem Signalstärkenvektor zusammengefaßt werden, wobei beispielsweise das erste Element dieses Signalstärkenvektors die Signalstärke der eigenen Feststation und die anderen Elemente die Signalstärke der anderen Feststationen angeben.

Besonders vorteilhaft ist es die gemessenen Signalstärken der benachbarten Feststationen zu der gemessenen Signalstärke der Feststation der eigenen Funkzelle ins Verhältnis zu setzen. Hierdurch erhält man eine Aussage über die Interferenzsituation an dem Aufenthaltsort von einer jeweiligen Mobilstation. Werden hierzu die gemessenen Signalstärken logarithmisch bewertet, so erhält man durch Subtraktion des ersten Elements des Signalstärkenvektors von allen anderen Elementen einen Vektor mit den Verhältniszahlen. Da dieser Vektor die Interferenzsituation an dem Aufenthaltsort der Mobilfunkstation wiederspiegelt, wird dieser Vektor im folgenden als Interferenzvektor bezeichnet.

Die Zuordnung einer Mobilfunkstation zu einer Teilzelle kann in diesem Fall aufgrund einer Klassifikation der Interferenzvektoren erfolgen. Zur Klassifikation eignen sich prinzipiell Statistische Verfahren (zum Beispiel "Regressionsanalyse") oder auch Verfahren aus der Theorie Neuronaler Netzwerke (zum Beispiel "Learning Vector Quantization").

Besonders vorteilhaft zur Klassifikation ist es, die ins Verhältnis gesetzten Signalstärken mit einem vom Funksystem abhängigen Schwellenwert zu vergleichen. Dieser funksystemabhängige Schwellenwert ist beispielsweise der maximal zulässige Gleichkanalstörabstand. Bei Überschreitung dieses Schwellenwertes ist somit eine Störung wahrscheinlich, bei Unterschreitung des Schwellenwertes jedoch unwahrscheinlich. Je nach Unter- oder Überschreitung des Schwellenwertes kann somit eine duale Aussage "stört" bzw. "stört nicht" getroffen werden. Während eines Gespräches kann auf diese Weise für jede Mobilstation ein Kompatibilätsvektor erstellt werden.

Alle Mobilstationen innerhalb einer Funkzelle mit demselben Kombatibilitätsvektor werden einer Teilzelle zugeordnet. Mittels Zuordnungstabellen kann auch eine Zusammenfassung mehrerer voneinander verschiedener Kombatibilitätssvektoren zu einer Teilzelle vorgenommen werden. Auf diese Weise wird es ermöglicht gegebenenfalls mehrere Teilzellen mit vergleichbarer Störsituation zusammenzufassen. Das ist beispielsweise dann von Vorteil, wenn einzelne, von der Störsitutation vergleichbare Teilzellen ein nur geringes Verkehrsaufkommen aufweisen. Durch Zusammenfassung dieser entsprechenden Teilzellen können so Teilzellen mit annähernd gleichem Verkehrsaufkommen gebildet werden, wodurch das zur Verfügung stehende Kanalangebot gleichmäßig verteilt und somit auch besser genutzt werden kann.

Durch Messung des Verkehrsaufkommens und Verwendung der Meßergebnisse zur Anderung der Zuordnungstabelle kann die Zusammenfassung von Teilzellen an das jeweils erfaßte aktuelle Verkehrsaufkommen angepaßt werden.

Die Verwendung von Kompatibilitätsvektoren zur Klassifikation der Teilzellen bietet den Vorteil, daß sie in besonders einfacher Weise die gesamte aktive Störinformation wiederspiegelt. Als aktive Störinformation wird hierbei die Zusammenfassung aller, von anderen Feststationen verursachten unerwünschten Einwirkungen auf die jeweils betrachtete Mobilstation bezeichnet. Umgekehrt wird als passive Störinformation die Zusammenfassung aller unerwünschten Einwirkungen auf andere Feststationen bezeichnet, die durch die jeweils betrachtete Mobilstation hervorgerufen werden.

Durch Sammlung aller Kompatiblitätsvektoren, beispielsweise in einer zentralen Auswerteeinrichtung kann die passive Störinformation erhalten werden. In Form einer Kompatibilitätsmatrix erhält man so die komplette Kanalverträglichkeitsinformation zwischen den Teilzellen.

Noch größere Netzflexibilität erreicht man durch einen veränderbaren Schwellenwert.

Zu jedem Schwellenwert ergibt sich für jede Teilzelle nur eine bestimmte Anzahl verfügbarer Funkkanäle, die die durch den Schwellenwert vorgegebene Funkqualität erfüllen. Durch Verringerung oder Erhöhung des Schwellenwertes kann somit die Funkqualität in einer Teilzelle eingestellt werden. Bei geringem Verkehrsaufkommen, beispielsweise in der Nacht, kann durch Heraufsetzung des Schwellenwertes eine hohe Funkqualität erzielt werden. Sobald der Verkehr dies beispielsweise in Hochlastzeiten erfordert, kann durch Herabsetzung der Schwellenwertes bei verminderter Funkqualität die Kapazität einer Funkzelle wieder vergrößert werden.

Durch Veränderung des Schwellenwertes läßt sich auch die virtuelle Größe einer Teilzelle und über die Größe der Teilzellen auch die Anzahl der in einer Funkzelle sich einstellenden Teilzellen verändern. Die Größe beziehungsweise Anzahl der Teilzellen kann somit den Netzerfordernissen mit relativ einfachen Mitteln angepaßt werden. So ist es beispielsweise möglich, bestimmte Zellen deren Verkehrsaufkommen sehr gering ist, durch eine überproportionierte Schwelle faktisch nicht mehr existieren zu lassen. Um einen ordentlichen Funkbetrieb zu gewährleisten, muß der Funkverkehr einer faktisch nicht mehr existierenden Teilzelle durch geeignete Maßnahmen, beispielsweise über Zuordnungstabellen, einer anderen Teilzelle zugewiesen werden.

Ein entscheidender Vorteil eines solchen Funknetzes ist, daß eine Planung von Klein- und Kleinstzellen mit unsicheren Daten vermieden werden kann. Eine Anpassung der Teilzellen entsprechend der aktuellen Störsituation und der aktuellen Verkehrslast kann während des Netzbetriebes auf Funkzellenebene selbständig vorgenommen werden.

Für jede Teilzelle können mittels entsprechend angepaßter Methoden der klassischen Funknetzplanung, wie z. B. Graphenfärbung, Simulated Annealing, etc. feste Kanallisten pro Teilzelle bestimmt werden. Bei aktuellem Kanalbedarf erfolgt die Vergabe eines beliebigen Kanals aus der betreffenden Teilzellenliste.

Aber auch dynamische Kanalzuweisungen, die nicht mit einer Kompatibilitätsmatrix arbeiten, sondern die Zellinformationen in irgendeiner anderen Weise zur Kanal angabe heranziehen, sind anwendbar. All diese Methoden lassen sich dahingehend abwandeln, daß anstelle der Funkzellen die Teilzelleninformation verwendet wird. Solche dynamischen Kanalzuweisungsverfahren sind beispielsweise des Channel-Segregations-Verfahren nach Furuya und Akaiwa.

Eine weitere Ausgestaltung des zellularen Mobilfunksystems sieht vor, daß die Zuordnungsparameter gesammelt und derart ausgewertet werden, daß die Zuordnung der Funkkanäle, Größe und Anzahl der Teilzellen aufgrund der ausgewerteten Daten jeweils geändert wird.

Durch das Sammeln und Auswerten der Zuordnungsparameter erhält man, viel besser als bei Vorausberechnungen, den tatsächlichen augenblicklichen Kanalbedarf und in guter Näherung die tatsächliche Störsituation im gesamten zellularen Mobilfunksystem. Durch Auswertung und jeweils neuer Zuordnung der Teilzellen und der Funkkanäle aufgrund der ausgewerteten Daten kann sich das Mobilfunksystem selbst an die jeweilige Bedarfssituation anpassen. Hierdurch ist es auch möglich, die Größe der Teilzellen so klein zu wählen, wie dies bisher für eine Modellierung bzw. Vorausberechnung nicht mehr sinnvoll möglich war.

Die Erfindung wird nun anhand von in den Figuren dargestellten Ausführungsbeispielen näher beschrieben und erläutert.

Es zeigen:
- Fig. 1: Manhattan-Modell mit gleichförmiger Funkkanalverteilung,
- Fig. 2: Verteilung von Teilzellen im Manhattan-Modell,
- Fig. 3: Zuordnungstabelle Kompatibilitätsvektor zu klassifizierten Teilzellen
- Fig. 4: Manhattan-Modell mit Verteilung der Funkanäle auf klassifizierte Teilzellen.

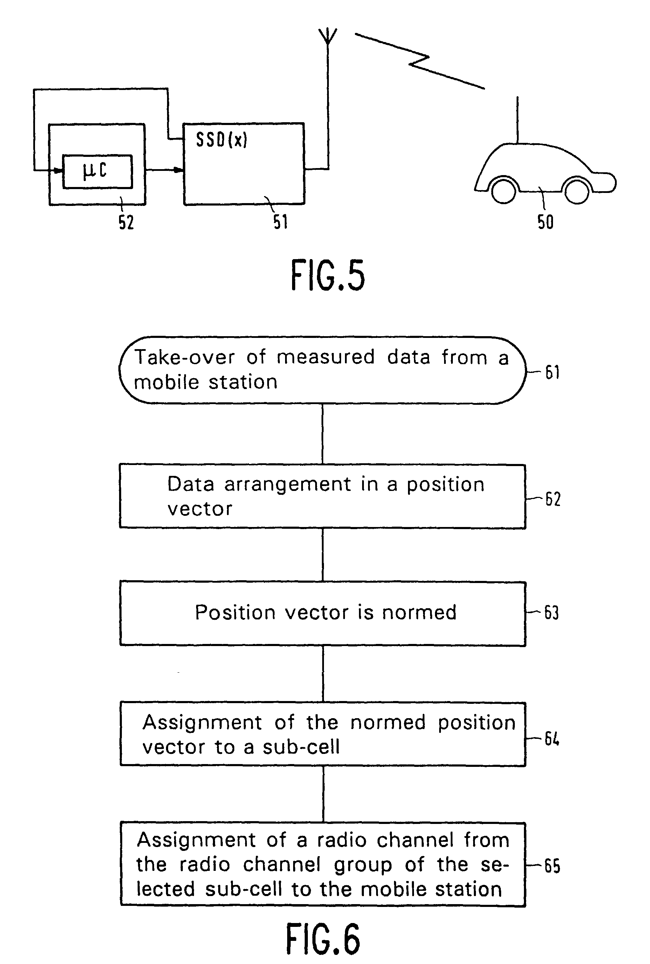

- Fig. 5: Schematische Dartstellung einer Feststation für ein erfindungsgemäßes Funksystem
- Fig. 6: Verarbeitungschritte in einer erfindungsgemäßen Auswerte- und Steuereinrichtung zur Zuweisung einer Mobilstation zu einer Teilzelle

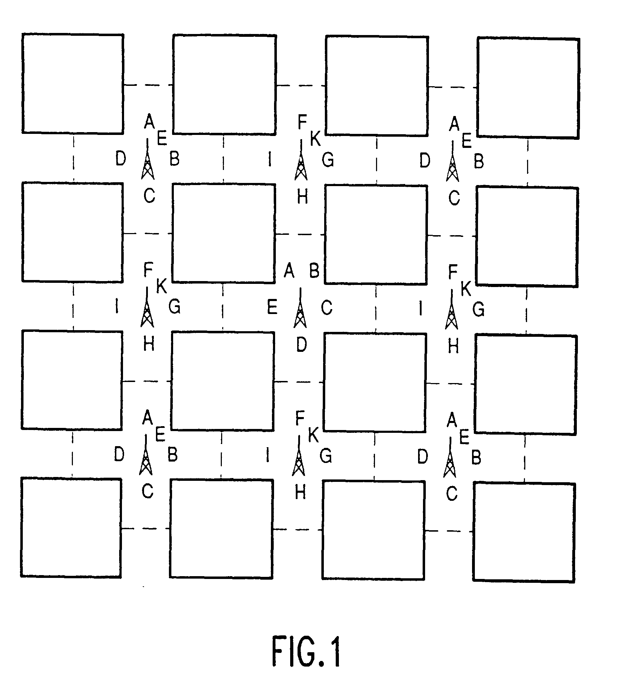

Fig. 1 zeigt ein Modell eines innerhalb einer Großstadt realisierten Mobilfunksystems. Die Feststationen sind jeweils an den Kreuzungen von horizontal und vertikal laufenden Straßen angeordnet. An den Straßenseiten sind jeweils Gebäudefluchten angeordnet, die den Funkkontakt zwischen parallel laufenden Straßen abschirmen. Die Funkwellen können sich somit nur entlang der Straßen ausbreiten. Da sich eine solche Infrastruktur beispielsweise in Manhattan findet, nennt man dieses Modell Manhattan-Modell.

Anhand dieses Modells läßt sich der Vorteil der Teilzellenbildung durch Verwendung eines Ortsvektors anschaulich verdeutlichen. Generell ist die Erfindung jedoch nicht auf dieses Modell beschränkt. Da die Erfindung sich jedoch Störungen der Funkausbreitungsbedingungen besonders zu Nutze macht - und diese sind in der Realität die Regel -, wirkt sich das Vorhandensein von Hindernissen, wie beispielsweise abschirmenden Gebäuden, etc. vorteilhaft auf die Erfindung aus,

Bei dem in Fig. 1 dargestellten Modell existieren zu einer Feststation jeweils acht benachbarte Feststationen. Wegen der Wellenausbreitung in horizontaler und vertikaler Richtung können die vertikal und horizontal benachbarten Feststationen nicht die gleichen Funkkanäle benutzen. Dadurch reduziert sich die Anzahl der störenden Nachbarsender in diesem Modell auf vier Nachbarsender. Durch die Abschattung der Gebäudeblöcke können nämlich bereits die diagonal benachbarten Funkzellen wieder dieselben Funkkanäle benutzen. Geht man beispielsweise von einem Kanalbedarf von fünfzig Funkkanälen pro Funkzelle aus, so sind bei diesem Modell insgesamt zehn verschiedene Funkkanalgruppen A...K mit jeweils 10 einzelnen Funkkanälen vorgesehen. (Hierbei ist der Effekt, daß sich zueinander diagonal angeordnete Feststationen nicht stören, schon entsprechend in der Planungsphase zu berücksichtigen.)

Generell bestehen zwei unterschiedliche Möglichkeiten zur Sammlung der Meßdaten, anhand derer der Ortsvektor gebildet wird. Zum einen können die Mobilstationen alle Daten, die für die Berechnung eines Ortsvektors benötigt werden selbst sammeln und zur Feststation übermitteln; zum anderen können die umliegenden Feststationen auch jede einzelne Mobilstation anmessen und die Daten zu einer Auswertestelle übermitteln.

Im Ausführungsbeispiel wird die erste Möglichkeit geschildert, die besonders vorteilhaft ist bei zellularen Mobilfunksystemen, bei denen jede Feststation mindestens einen Organisationskanal mit maximaler Sendeleistung ausstrahlt. Die Austrahlung eines Organisationskanals mit maximaler Sendeleistung garantiert, daß dieser Organisationskanal auch in benachbarten Zellen mit noch ausreichender Feldstärke durch die Mobilstationen empfangen werden kann.

In einem zellularen Funksystem dienen solche Organisationskanäle zum Austausch von organisatorischen Daten zwischen einer Feststation und den Teilnehmern in der Funkzelle, beispielsweise zur Übermittlung eines Gesprächsaufbauwunsches oder zur Vereinbarung eines zugewiesenen Gesprächskanals. Je nach ihrer Funktion werden solche Organisationskanäle auch als Kontrollkanäle bezeichnet.

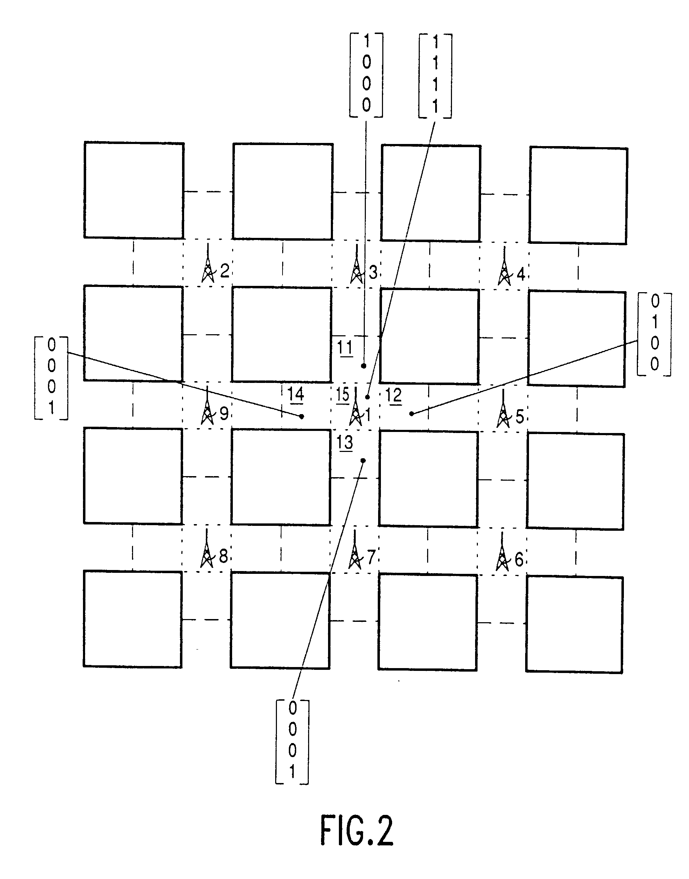

Beim Ausführungsbeispiel werden von einer Feststation sobald sich eine Mobilstation bei dieser Feststation anmeldet, beziehungsweise bei einem Wechsel einer Mobilstation von einer benachbarten Funkzelle in die Funkzelle dieser Funkfeststation, der Mobilstation alle Frequenzen der Organisationskanäle, die von der jeweiligen Mobilstation zu messen sind, mitgeteilt. Einer sich im Funkgebiet der Feststation 1 (siehe Fig. 2) befindlichen Mobilstation werden also gemäß dem Ausführungsbeispiel die Frequenzen der Organisationskanäle der Feststationen 3, 5, 7 und 9 mitgeteilt. Bei modernen Mobilfunksystemen, bei denen die Sprachsignale zeitkomprimiert in Zeitschlitzen ausgesendet und empfangen werden, hat die Mobilstation zwischen den jeweils auszuwertenden Zeitschlitzen genügend Zeit, sich auf diese Frequenzen abzustimmen und die funktechnischen Parameter, in diesem Ausführungsbeispiel eben die Empfangsfeldstärken der übermittelten Organisationskanäle zu messen. Bei anderen Funksystemen, bei denen kontinuierlich empfangen werden muß, wäre dementsprechend ein eigens für die Messung der gewünschten funktechnischen Parameter geeigneter zusätzlicher Empfänger vorzusehen. Die gemessenen Parameter werden von der Mobilstation zu der ihr zugeordneten Feststation zurückgesandt.

Die Feststationen des Ausführungsbeispiels enthalten einen Base Station Controller 51, in welchem unter anderen die von einer Mobilstation 50 empfangenen Signale in Sprachdaten und Signalisierungsdaten getrennt werden. Aus den Signalisierungsdaten werden wiederum die von der Mobilstation 50 gesendeten Meßwerte SSD (signal strength data) ausgesondert und einer speziellen Auswertevorrichtung 52 zugeführt. Diese Auswertevorrichtung ist beispielsweise ein Mikrocomputer mit entsprechender Programmierung.

Dieser Mikrocomputer übernimmt die Meßdaten der Mobilstationen (61) und ordnet sie in zu einem Ortsvektor (62)/an. Die Reihenfolge der Ordnung kann ansich beliebig gewählt werden, nur muß stets die gleiche Reihenfolge verwendet werden. Im Ausführungsbeispiel werden die Meßergebnisse entsprechend der Nummerierung der Bezugszeichen der Feststationen gewählt:
(SSD(3), SSD(5), SSD(7), SSD(9)). SSD(3) entspricht der Feldstärke mit der der Organisationskanal der Feststation 3 von der Mobilstation empfangen wurde und so weiter.

Der auf diese Weise geordnete Ortsvektor wird anschließend normiert (63). Hierzu wird jede einzelne Komponente des Ortsvektors durch die Empfangsfeldstärke SSD(1), mit der die Mobilstation die eigene Feststation empfangen hat, geteilt:
(SSD(3)/SSD(1),SSD(5)/SSD(1),SSD(7)/SSD(1),SSD(9)/SSD(1))

Zur Zuordnung diese normierten Ortsvektor zu einer Teilzelle (64) wird dann jedes normierte Element des Ortsvektors mit einem vorgebbaren Schwellwert verglichen und ein Kompatibilitätsvektor berechnet. Überschreitet das jeweils betrachtete Element des normierten Ortsvektors diesen Schwellenwert, so erhält das zum entsprechenden Element des Ortsvektors korrespondierende Element des Kompatibilitätsvektors den Wert "1", ansonsten den Wert "0". Vorzugsweise wird dieser Schwellenwert gleich dem für eine ungestörte Funkverbindung erforderlichen Gleichkanalabstand gewählt.

Bei einem Kompatibilitätsvektor mit vier Elementen sind auf diese Weise rein rechnerisch 2⁴ = 16 verschiedene Kompatibilitätsvektoren möglich, so daß im Ausführungsbeispiel zwischen sechzehn verschiedenen Teilzellen unterschieden werden könnte. Bei Verwendung mehrerer Schwellenwerte kann sogar eine beliebig hohe Auflösung erzielt werden. Im einfachsten Fall sind für jeden möglichen Kompatibilitätsvektor eine eigene Auswahl von Funkkanälen vorzusehen. Je nach berechnetem Kompatibilitätsvektor wird nun der Mobilstation ein dem Kompatibilitätsvektor zugeordneter freier Funkkanal zugewiesen.

Zur Messung der tatsächlichen Gleichkanalstörung müßten die Feststationen tatsächlich auch alle auf einem gleichen und am besten auf dem zu vergebenden Kanal senden. Dies ist mit entprechenden technischen Aufwand auch erreichbar. Im Ausführungsbeispiel hingegen wurde in einer Näherung nicht der tatsächliche Gleichkanalabstand gemessen, sondern die Signalstärke eines jeweiligen Organisationskanals einer Feststation.

Da die Frequenzen dieser Organisationskanäle zur Vermeidung von Gleichkanalstörungen, zumindest gegenüber benachbarten Funkzellen, unterschiedlich gewählt sind, macht sich das Ausführungsbeipiel die Erkenntnis zu Nutze, daß in guter Näherung davon ausgegangen werden kann, daß die Ausbreitungsbedingungen der Organisationskanäle im wesentlichen den Ausbreitungsbedingungen der verwendeten Funkkanäle entsprechen. Auf diese Weise kann der Aufwand zur Messung des Gleichkanalabstandes des jeweils auszuwählenden Kanals auf die Messung des Gleichkanalabstandes des jeweiligen Organisationskanals reduziert werden.

Den praktischen Zusammenhang zwischen Kompatibilitätsvektor und Teilzelle zeigt Fig. 2. Diese Figur zeigt das gleiche Modell wie in Fig. 1, bei dem jedoch jede Funkzelle 1 in fünf Teilzellen 11...15 unterteilt ist. Die Grenzen der Teilzellen sind in Fig. 2 durch gepunktete Linien dargestellt.

Befindet sich beispielsweise eine Mobilstation in der Teilzelle 14, so ist die Entfernung zu der Feststation 5 so groß, daß der Gleichkanalabstand hier entsprechend groß ist. Wegen der Abschattung durch die angrenzenden Gebäude ist auch der Gleichkanalabstand zu den vertikal benachbarten Mobilstationen 3 und 7 entsprechend gewahrt. Hingegen ist der Gleichkanalabstand zur Basisstation 9 entsprechend gering, so daß hier durch die Messungen der Mobilstation in dem entsprechenden Kompatibilitätsvektor eine Eins eingetragen wird. Mit dem Kompatibilitätsvektor (0, 0, 0, 1) ist somit eine eindeutige Zuordnung der Mobilstation zu dieser Teilzelle möglich. In entsprechender Weise ergeben sich für die anderen Teilzellen andere eindeutige Kompatibilitätsvektoren.

Wie bereits erwähnt, sind beim gewählten Ausführungsbeispiel ansich sechzehn verschiedene Kompatibilitätsvektoren, beziehungsweise Teilzellen möglich. In dem verwendeten Modell können sich jedoch Teilzellen mit Kompatibilitätsvektoren mit zwei Einsen nur an solchen Orten einstellen, an denen benachbarte Funkstationen annähernd gleich stark empfangen werden. Die idealisierten Wellenausbreitungsbedingungen entlang der Straßen vorausgesetzt, entsprachen diese Orte im Modell den Orten, an denen die Gebäude stehen. Somit sind im Modell, bis auf die Übergänge von einer Teilzelle zu einer anderen von vorneherein nur Kompatibilitätsvektoren mit vier Nullen für die mittlere Teilzelle beziehungsweise vier Kompatibiliätsvektoren mit nur einer einzigen Eins für die um die mittlere Zelle umliegenden Teilzellen vorherrschend.

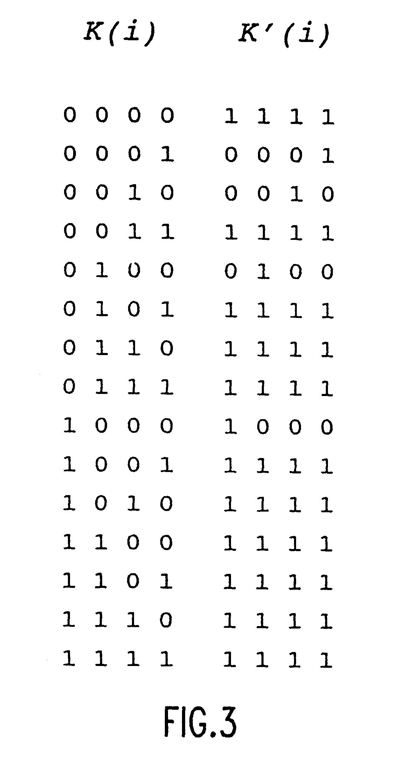

Diese idealisierten Bedingungen können bei der Funknetzplanung beispielsweise durch eine, wie in Fig. 3 dargestellte Zuordnungstabelle von vornherein berücksichtigt werden. Mit der in Fig. 3 gezeigten Zuordnungstabelle wird die Anzahl der sich theoretisch einstellenden Teilzellen auf eine begrenzte Anzahl von Teilzellen reduziert. In der Spalte K(i) der Fig. 3 sind alle theoretisch möglichen Kompatibilitätsvektoren aufgelistet. In der nebenstehenden Spalte K'(i) ist jedem möglichen Kompatibilitätsvektor ein ausgewählter Kompatibilitätsvektor zugeordnet. Die in Fig. 3 dargestellte Zuordnungstabelle ist so aufgebaut, daß jeder Kompatibilitätsvektor, der mehr als eine Eins enthält, einen Kompatibilitätsvektor zugeordnet bekommt, dessen Elemente insgesamt aus Einsen bestehen. Auf diese Weise reduziert sich die Anzahl der zugeordneten Kompatibilitätsvektoren auf sechs.

Durch die verwendete Zuordnung ist jedem Straßenabschnitt einer Funkzelle eine bestimmte Teilzelle eindeutig zugeordnet. Die der mittleren Teilzelle zusätzlich zugeordneten Teilzellen entsprechen im wesentlichen den Teilzellen die sich für Funkorte in den Gebäuden einstellen. Wird der Funkverkehr in den Gebäuden beispielsweise durch sogenannte "inhouse"-Systeme abgewickelt, so liefern die zusätzlich der mittleren Teilzelle zugeordneten Teilzellen einen nur unwesentlichen Verkehrsbeitrag. Bei gleichen Verkehrsfluß in vertikaler und horizontaler Richtung ist somit das Verkehrsaufkommen in der Funkzelle auf alle fünf Teilzellen gleichermaßen verteilt.

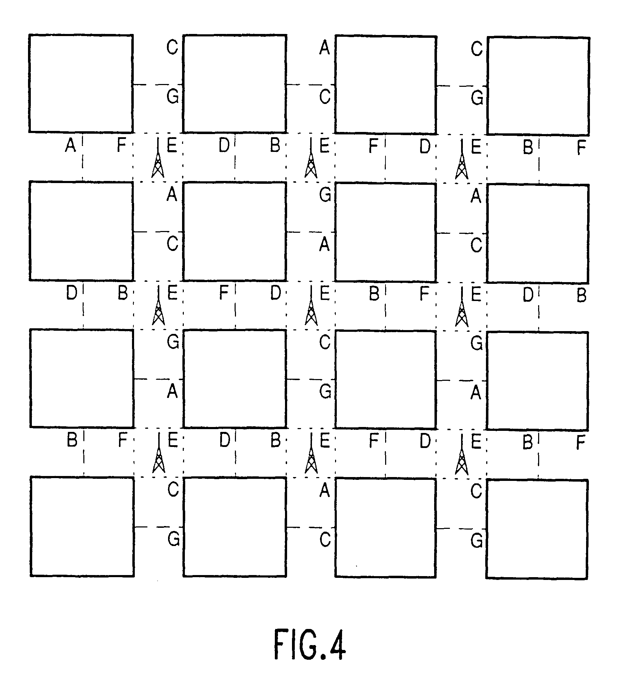

Fig. 4 zeigt einen Funkkanalverteilungsplan bei dem jeder Teilzelle ein Funkkanal und somit jeder Funkzelle wiederum fünfzig Funkkanäle zugeteilt sind. Aufgrund der Teilzellenbildung werden nunmehr nur noch sieben Funkkanalgruppen A...G mit jeweils zehn Funkkanälen für einen störungsfreien Betrieb benötigt. Durch Verteilung der auf diese Weise eingesparten drei Funkkanäle auf das gesamte Mobilfunksystem ist somit gegenüber der Frequenzverteilung nach Fig. 1 eine erhebliche Kapazitätssteigerung bei diesem Modell von ca. 43 % möglich. Diese Kapazitätssteigerung liegt jedenfalls höher als der Gewinn, den man durch eine Teilzellenbildung erzielen würde, die sich an einem Interferenzgradienten orientiert. Bei Annahme der idealisierten Bedingungen von Fig. 4 mit gleichentfernten Nachbarsendern, die alle mit der gleichen Sendeleistung senden, würden alle zur mittleren Teilzelle 15 umliegenden Teilzellen 11, 12, 13, 14 den gleichen Interferenzquotienten aufweisen und so untereinander nicht unterscheidbar sein.

Solche idealen Voraussetzungen wie bei den Modellen sind in der Realität natürlich nicht zu erwarten. Der Vorteil der Erfindung liegt jedoch darin, daß durch die Zuordnung der Mobilstationen über gemessene Parameter eine selbständige und eindeutige Zuordnung zu einer Teilzelle möglich ist. Die Teilzellen sind sogar von den örtlichen Gegebenheiten unabhängig und werden lediglich durch die Funkeigenschaften einer Teilzelle bestimmt.

Durch die Selbsteinordnung einer Teilzelle können auch topographische und morphologische Änderungen (wie beispielsweise Abschattungen durch ein neugebautes Hochhaus etc.) selbständig erfaßt werden. Ausgeprägte topographische und morphologische Änderungen führen somit zu einer Veränderung der Teilzellenstruktur, da sich für bestimmte Funkorte eine andere Klassifikation des Funkortes, beispielsweise durch einen anderen Kompatibilitätsvektor ergibt.

Bei dem bisher betrachteten Ausführungsbeispiel wurde die Messung der Empfangsfeldstärken ausschließlich in den Mobilstationen vorgenommen. Da die Funkfeldabschwächung zwischen Feststation und Mobilstation richtungsunabhängig ist, können diese Messungen auch in den Feststationen vorgenommen werden. In einem solchen Fall ist eine zentrale Sammelung und Auswertung der Daten vorzusehen.

Bei diesem Beispiel gibt der Kompatibilitätsvektor nur die down-link-Störsituation (down-link = Richtung von Feststation zur Mobilstation) einer Teilzelle wieder. Durch zentrale Sammelung und Auswertung der Empfangsfeldstärkevektoren ist auch die up-link-Störsituation (up-link = Richtung von Mobilstation zu Feststation) erhältlich.

In einer besonderen Ausführungsform der Erfindung ist jeder möglichen Teilzelle ein Speicher zugeordnet, in welchem die Anzahl der in dieser Teilzelle geführten Gespräche registriert wird. Am Ende eines Auswertungszeitraums, beispielsweise nach einer Woche, werden Teilzellen mit geringen Verkehrsaufkommen und vorzugsweise ähnlicher Störsituation zu einer Teilzelle zusammengefaßt. Teilzellen mit ähnlicher Störsituation erhält man hierbei durch Bewertung und Vergleich der Kompatibilitätsvektoren der Teilzellen. Teilzellen die zusammengefaßt werden, erhalten in der linken Spalte K'(i) der Zuordnungstabelle den gleichen Eintrag.

Durch die Teilzelleninformation ist es somit möglich, ein solches Mobilfunksystem adaptiv auszugestalten, so daß sich das Mobilfunksystem an den tatsächlichen Bedarf und die tatsächliche Verkehrssituation selbständig von Anfang an anpaßt. Einem sich solchermaßen selbst aufbauenden Funksystem kommt insbesondere der Effekt zu Gute, daß im allgemeinen bei Inbetriebnahme eines neuen Funksystems die Verkehrslast zunächst nur langsam ansteigt, die relative Verteilung der Verkehrslast auf die einzelnen Teilzellen jedoch unabhängig von der absoluten Anzahl der Funkteilnehmer ist. Auf diese Weise kann schon bei Schwachlastbetrieb eine Optimierung eines neuen Funksystems vorgenommen werden, wobei am Anfang erhöhter Rechenaufwand, zum Beispiel zum Optimieren der Zuordnungstabellen noch ohne weiteres in Kauf genommen werden kann.

Insbesondere erhöht sich bei einem solchen selbstadaptiven Funksystem die Betriebssicherheit von Mikrozellennetzen, da bei Mikrozellen die bisherigen in der Funknetzplanung verwendeten Methoden sich nur als bedingt tauglich erwiesen haben.

Ferner hat man die Möglichkeit durch Vergleich zweier zeitlich hintereinander ermittelter Ortsvektoren, beziehungsweise Kompatibilitätsvektoren die Richtung zu bestimmen, in welche sich die Mobilstation innerhalb einer Funkzelle bewegt. Diese Information kann in an sich bekannter Weise ergänzend dazu verwendet werden, eine Entscheidung für einen Funkzellenwechsel (handover) zu treffen. Es kann damit beispielsweise entschieden werden, ob sich eine Mobilstation tatsächlich in Richtung auf eine andere Funkzelle hinwärts bewegt oder ob sie sich lediglich entlang der Funkzellengrenze bewegt. Im letzteren Fall kann mit dieser Information ein ständiger und unnötiger Funkzellenwechsel vermieden werden.

## Patentansprüche

1. Zellulares Mobilfunksystem mit jeweils einer einer jeden Funkzelle zugeordneten Feststation (1) und Auswerte- und Steuervorrichtungen (52) die dazu vorgesehen sind:
- funktechnische Parameter anderer Feststationen (2, 3, 4, 5, 6, 7, 8, 9) zu messen und aufgrund dieser Messung eine Mobilstation (50) einer bestimmten Teilzelle (11, 12, 13, 14, 15) einer jeweiligen Funkzelle zuzuordnen, wobei der Funkverkehr von und zu den Mobilstationen (50) einer jeden Teilzelle (11, 12, 13, 14, 15) über die Feststation (1) der jeweiligen Funkzelle geführt wird,
- für jede Teilzelle eine eigene Auswahl von Funkkanälen zu verwenden,
dadurch gekennzeichnet,
daß die Auswerte- und Steuervorrichtungen (52) dazu vorgesehen sind, aus den Meßwerten (61) einen, einer jeweiligen Mobilstation (50) zuordenbaren Ortsvektor zu bilden (62) und mittels des jeweiligen Ortsvektors die betreffende Mobilstation - der jeweiligen Teilzelle (11, 12, 13, 14, 15) zuzuordnen (64).

2. Zellulares Mobilfunksystem nach Anspruch 1
dadurch gekennzeichnet.
daß zur Zuordnung einer Mobilstation (50) zu einer Teilzelle (11, 12, 13, 14, 15) vorgesehen ist, die Meßwerte mit funksystemabhängigen Schwellenwerten zu vergleichen.

3. Zellulares Mobilfunksystem nach Anspruch 1 oder 2,
dadurch gekennzeichnet,
daß zur Zuordnung eines Ortsvektoren zu einer Teilzelle Zuordnungstabellen vorgesehen sind.

4. Zellulares Mobilfunksystem nach Anspruch 3,
dadurch gekennzeichnet,
daß Mittel vorgesehen sind, das jeweils aktuelle Verkehrsaufkommen zu messen und entsprechend dem gemessenen Verkehrsaufkommen auf die Zuordnungstabellen einzuwirken.

5. Zellulares Mobilfunksystem nach Anspruch 2, 3 oder 4,
dadurch gekennzeichnet,
daß eine Änderung des funksystemabhängigen Schwellenwertes vorgesehen ist.

6. Zellulares Mobilfunksystem nach Anspruch 1, 2, 3, 4 oder 5
dadurch gekennzeichnet,
daß als Zuordnungsparameter die Messung der Signalstärken vorgesehen ist.

7. Zellulares Mobilfunksystem nach Anspruch 6,
dadurch gekennzeichnet,
daß die gemessenen Signalstärken der benachbarten Feststationen zu der gemessenen Signalstärke der Feststation der eigenen Funkzelle ins Verhältnis gesetzt werden.

8. Zellulares Mobilfunksystem nach Anspruch 1, 2, 3, 4, 5, 6, 7 oder 8,
dadurch gekennzeichnet,
daß durch Vergleich zweier zeitlich aufeinanderfolgender Ortsvektoren die Bewegungsrichtung einer Mobilstation (50) innerhalb einer Funkzelle ermittelt wird.

9. Zellulares Mobilfunksystem nach Anspruch 1, 2, 3, 4, 5, 6, 7 oder 8,
dadurch gekennzeichnet,
daß
- Mittel (52) zum Sammeln und Auswerten der Zuordnungsparameter,
- Mittel (52) zur Ermittlung einer neuen Kanalverteilung aus den ausgewerteten Daten und
- Mittel (52) zur Änderung der Kanalverteilung in den einzelnen Teilzellen vorgesehen sind.

10. Feststation (1) für ein zellulares Mobilfunksystem mit Auswerte- und Steuervorrichtungen (52) zur Unterteilung einer Funkzelle in Teilzellen (11, 12, 13, 14, 15), und zur Verwaltung einer eigenen Auswahl von Funkkanälen für jede Teilzelle, wobei der Funkverkehr von und zu den Mobilstationen (50) einer jeden Teilzelle (11, 12, 13, 14, 15) über die Feststation (1) der jeweiligen Funkzelle geführt wird und zur Zuordnung einer Mobilstation (50) zu einer Teilzelle funktechnische Parameter ausgewertet werden,
dadurch gekennzeichnet,
daß die Auswerte- und Steuervorrichtung (52) dazu vorgesehen ist, aus den ausgewerteten funktechnischen Parametern einen einer jeweiligen Mobilstation zugeordneten Ortsvektor zu bilden (62) und mittels des jeweiligen Ortsvektors die betreffende Mobilstation einer bestimmten Teilzelle zuzuordnen (64).

11. Auswerte- und Steuervorrichtung (52) für ein zellulares Mobilfunksystem zur Unterteilung einer Funkzelle in Teilzellen (11, 12, 13, 14, 15) und zur Verwaltung einer eigenen Auswahl von Funkkanälen für jede Teilzelle, wobei der Funkverkehr von und zu den Mobilstationen (50) einer jeden Teilzelle (11, 12, 13, 14, 15) über die Feststation (1) der jeweiligen Funkzelle geführt wird, und zur Zuordnung einer Mobilstation (50) zu einer Teilzelle (11, 12, 13, 14, 15) funktechnische Parameter ausgewertet werden,
dadurch gekennzeichnet,
daß die Auswerte- und Steuervorrichtung (52) dazu vorgesehen ist, aus den ausgewerteten funktechnischen Parametern einen einer jeweiligen Mobilstation (50) zugeordneten Ortsvektor zu bilden (62) und mittels des jeweiligen Ortsvektors die betreffende Mobilstation einer bestimmten Teilzelle zuzuordnen (64).

12. Steuer- und Auswerteeinrichtung (52) für ein zellulares Mobilfunksystem nach Anspruch 11 bei dem folgende Mittel vorgesehen sind:
- Mittel zum Sammeln von Meßergebnissen von und/oder über Mobilfunkstationen,
- Mittel zur Klassifizierung der gesammelten Daten in Teilzellen,
- Mittel zur Durchführung einer neuen Kanalvergabe aufgrund der klassifizierten Daten.

## Claims

1. A cellular mobile radio system comprising a fixed station (1) assigned to each respective radio cell and evaluation and control units (52) which are provided for:
- measuring radio parameters of other fixed stations (2,3,4,5,6,7,8,9) and on the basis of this measurement assigning a mobile station (50) to a specific sub-cell (11,12,13,14,15) of a respective radio cell, while the radio traffic from and to the mobile stations (50) of each sub cell (11,12,13,14,15) is led via the fixed station (1) of the respective radio cell,
- using a separate selection of radio channels for each sub-cell,
characterized in that the evaluation and control units (52) are provided for forming a position vector (62) on the basis of measured values (61) which position vector can be assigned to a respective mobile station (50) and for assigning the respective mobile station to the sub-cell (11,12,13,14,15) on the basis of the respective position vector.

2. A cellular mobile radio system as claimed in Claim 1, characterized in that for assigning a mobile station (50) to a sub-cell (11,12,13,14,15) the measuring values are compared with threshold values that depend on the radio system.

3. A cellular mobile radio system as claimed in Claim 1 or 2, characterized in that assignment Tables are provided for assigning position vectors to a sub-cell.

4. A cellular mobile radio system as claimed in Claim 3, characterized in that means are provided for measuring each time the actual traffic load and influencing the assignment Tables in accordance with the measured traffic load.

5. A cellular mobile radio system as claimed in Claim 2, 3 or 4, characterized in that a change is made of the threshold value that depends on the radio system.

6. A cellular mobile radio system as claimed in Claim 1, 2, 3, 4 or 5, characterized in that the measurement of the signal strengths is taken as an assignment parameter.

7. A cellular mobile radio system as claimed in Claim 6, characterized in that the measured signal strengths of the adjacent fixed stations are put in proportion to the measured signal strength of the fixed station of the mobile station's own radio cell.

8. A cellular mobile radio system as claimed in Claim 1,2,3,4,5,6,7 or 8, characterized in that the direction in which a mobile station (50) moves within a radio cell is determined by comparing two time-consecutive position vectors.

9. A cellular mobile radio system as claimed in Claim 1, 2, 3, 4, 5, 6, 7 or 8, characterized in that there are provided
- means (52) for collecting and evaluating the assignment parameters,
- means (52) for determining a new channel distribution on the basis of the evaluated data, and
- means (52) for changing the channel distribution in the individual sub-cells.

10. A fixed station (1) for a cellular mobile radio system comprising evaluation and control units (52) for subdividing a radio cell into sub-cells (11,12,13,14,15), and for organizing for each sub-cell its own selection of radio channels, while the radio traffic to and from the mobile stations (50) of each sub-cell (11,12,13,14,15) is led via the fixed station (1) of the respective radio cell, and radio parameters are evaluated for the assignment of a mobile station (50) to a sub-cell, characterized in that the evaluation and control unit (52) is provided for forming from the evaluated radio parameters a position vector (62) assigned to a mobile station and for assigning the respective mobile station to a specific sub-cell (64) on the basis of the respective position vector.

11. Evaluation and control unit (52) for a cellular mobile radio system for subdividing a radio cell into sub-cells (11,12,13,14,15) and for organizing for each sub-cell its own selection of radio channels, while the radio traffic to and from the mobile stations (50) of each sub-cell (11,12,13,14,15) is led via the fixed station (1) of the respective radio cell, and radio parameters are evaluated for the assignment of a mobile station (50) to a sub-cell (11,12,13,14,15), characterized in that the evaluation and control unit (52) is provided for forming from the evaluated radio parameters a position vector (62) assigned to a mobile station (50) and for assigning the respective mobile station to a specific sub-cell (64) on the basis of the respective position vector.

12. Control and evaluation unit (52) for a cellular mobile radio system as claimed in claim 11, comprising the following means,
- means for collecting measurement results from and/or via mobile radio stations,
- means for classifying the collected data into sub-cells,
- means for performing a new channel assignment on the basis of the classified data.

## Revendications

1. Système cellulaire de radiotéléphonie mobile avec respectivement une station fixe (1) affectée à chaque cellule radio et des dispositifs d'évaluation et de commande (52) qui sont prévus pour:
- mesurer les paramètres techniques radio d'autres stations fixes (2, 3, 4, 5, 6, 7, 8, 9) et, en fonction de cette mesure, affecter une station mobile (50) à une cellule partielle déterminée (11, 12, 13, 14, 15) d'une cellule radio respective, le trafic radio de et vers les stations mobiles (50) de chaque cellule partielle (11, 12, 13, 14, 15) étant dirigé sur la station fixe (1) de la cellule radio respective,
- utiliser pour chaque cellule partielle une sélection spécifique de canaux radio, caractérisé en ce
que les dispositifs d'évaluation et de commande (52) sont prévus pour former à partir des valeurs de mesure (61) un rayon vecteur (62) susceptible d'être affecté à une station mobile respective (50) et affecter, à l'aide du rayon vecteur respectif, la station mobile correspondante à la cellule partielle respective (11, 12, 13, 14, 15).

2. Système cellulaire de radiotéléphonie mobile selon la revendication 1, caractérisé en ce
qu'en vue de l'affectation d'une station mobile (50) à une cellule partielle (11, 12, 13, 14, 15), il est prévu de comparer les valeurs de mesure avec des valeurs seuil dépendant du système radio.

3. Système cellulaire de radiotéléphonie mobile selon l'une des revendications 1 ou 2, caractérisé en ce
que des tableaux d'affectation sont prévus pour l'affectation d'un rayon vecteur à une cellule partielle.

4. Système cellulaire de radiotéléphonie mobile selon la revendication 3, caractérisé en ce
que des moyens sont prévus pour mesurer le trafic actuel respectif et, en fonction du trafic mesuré, agir sur les tableaux d'affectation.

5. Système cellulaire de radiotéléphonie mobile selon l'une des revendications 2, 3 ou 4, caractérisé en ce
que la mesure des intensités du signal est prévue comme paramètre d'affectation.

6. Système cellulaire de radiotéléphonie mobile selon l'une des revendications 1, 2, 3, 4 ou 5, caractérisé en ce
que la mesure des intensités du signal est prévue comme paramètre d'affectation.

7. Système cellulaire de radiotéléphonie mobile selon la revendication 6, caractérisé en ce
que les intensités de signal mesurées des stations fixes voisines sont mises en relation avec l'intensité de signal mesurée de la station fixe de la cellule radio spécifique.

8. Système cellulaire de radiotéléphonie mobile selon l'une des revendications 1, 2, 3, 4, 5, 6, 7 ou 8, caractérisé en ce
que, par comparaison de deux vecteurs locaux successifs dans le temps, la direction du mouvement d'une station mobile (50) est déterminée au sein d'une cellule radio.

9. Système cellulaire de radiotéléphonie mobile selon l'une des revendications 1, 2, 3, 4, 5, 6, 7 ou 8, caractérisé en ce que
- des moyens (52) en vue de la collecte et de l'évaluation des paramètres d'affectation;
- des moyens (52) en vue de la détermination d'une nouvelle répartition des canaux à partir des données évaluées, et
- des moyens (52) en vue de modifier la répartition des canaux dans les différentes cellules individuelles sont prévus.

10. Station fixe (1) pour un système cellulaire de radiotéléphonie mobile avec des dispositifs d'évaluation et de commande (52) pour la subdivision d'une cellule radio en cellules partielles (11, 12, 13, 14, 15), et en vue de la gestion d'une sélection spécifique de canaux radio pour chaque cellule partielle, le trafic radio de et vers les stations mobiles (50) de chaque cellule partielle (11, 12, 13, 14, 15) étant dirigé sur la station fixe (1) de la cellule radio respective et des paramètres techniques radio étant évalués en vue de l'affectation d'une station mobile (50) à une cellule partielle, caractérisée en ce
que le dispositif d'évaluation et de commande (52) est prévu pour former à partir des paramètres techniques radio évalués un rayon vecteur (62) affecté à la station mobile respective et, à l'aide du rayon vecteur respectif, affecter la mobilisation correspondante d'une cellule partielle déterminée (64).

11. Dispositif d'évaluation et de commande (52) pour un système cellulaire de radiotéléphonie mobile en vue de la subdivision d'une cellule radio en cellules partielles (11, 12, 13, 14, 15) et en vue de la gestion d'une sélection spécifique de canaux radio pour chaque cellule partielle, le trafic radio de et vers les stations mobiles (50) de chaque cellule partielle (11, 12, 13, 14, 15) étant dirigé par l'intermédiaire de la station fixe (1) vers la cellule radio respective et, en vue de l'affectation d'une station mobile (50) à une cellule partielle (11, 12, 13, 14, 15), des paramètres techniques radio sont évalués, caractérisé en ce
que le dispositif d'évaluation et de commande (52) est prévu pour former à partir des paramètres techniques radio évalués un rayon vecteur (62) affecté à une station mobile respective (50) et, à l'aide du rayon vecteur respectif, la station mobile correspondante doit être affectée à une cellule partielle déterminée (64).

12. Dispositif de commande et d'évaluation (52) pour un système cellulaire de radiotéléphonie mobile selon la revendication 11, dans lequel les moyens suivants sont prévus :
- des moyens de collecte des résultats des mesures par et/ou sur des stations de radiotéléphonie mobiles;
- des moyens de classification des données recueillies en cellules partielles;
- des moyens d'exécution d'une nouvelle affectation des canaux en fonction des données classées.
